# EUROPÄISCHE PATENTSCHRIFT

(11) **EP 1 257 228 B1**
(45) Veröffentlichungstag und Bekanntmachung des Hinweises auf die Patenterteilung: **28.06.2006**
(21) Anmeldenummer: 01915252.9
(22) Anmeldetag: 15.02.2001
(51) Int. Cl.: A61C 5/06, B65D 81/32, B05C 17/005

(54) **MISCHKAPSEL**
MIXING CAPSULE
CAPSULE DE MELANGE

(30) Priorität: 21.02.2000 DE 10007581
(43) Veröffentlichungstag der Anmeldung: 20.11.2002
(73) Patentinhaber: 3M ESPE AG, 82229 Seefeld (DE)
(72) Erfinder: PEUKER, Marc, 86938 Schondorf (DE); SICK, Michael, 82229 Seefeld (DE); STEFAN, Klaus-Peter, 82229 Seefeld (DE); HAGER, Gabriele, 86157 Augsburg (DE); STENGER, Angela, 82343 Possenhofen (DE); ECKHARDT, Gunther, 06231 Bad Dürrenberg (DE)
(74) Vertreter: Brem, Roland
(86) Internationale Anmeldenummer: PCT/EP2001/001646
(87) Internationale Veröffentlichungsnummer: WO 2001/062175

(56) Entgegenhaltungen:
- EP-A- 0 759 286
- WO-A-00/30953
- DE-A- 3 635 574

## Beschreibung

Die vorliegende Erfindung betrifft eine Mischkapsel und ein eine Mischkapsel enthaltendes Mischgerät, insbesondere zur Herstellung eines vorzugsweise mehrere Komponenten enthaltenden Dentalwerkstoffs.

Zur Herstellung von Mischungen aus zwei oder mehr Komponenten dienen Mischkapsein, die vom Hersteller mit den Komponenten in voneinander getrennten Kammern befüllt werden. Vom Anwender werden die Komponenten, etwa durch Zerstörung einer die Kammer trennenden Wand in Verbindung gebracht und miteinander gemischt.

Im Dentalbereich sind Mischkapseln zur Herstellung von Dentalwerkstoffen bekannt, die häufig aus einer pulverförmigen und einer flüssigen Komponente gemischt werden, wobei der Mischvorgang üblicherweise in einem Schütteigerät erfolgt. Die fertig gemischte Substanz wird dann durch eine an der Mischkapsel angeformte Ausbringtülle direkt auf die Arbeitsstelle etwa eine Zahnkavität ausgebracht.

Aus der DE 36 35 574 A ist eine Mischkapsel bekannt, die zur Herstellung von Verfugungs- und Abdichtmassen gedacht ist. Bei einem in diesem Dokument beschriebenen Ausführungsbeispiel ist eine in dem Ausbringkolben vorhandene Nebenkammer, auf der der Hauptkammer der Kapsel zugewandten Seite von einer Folie und auf der entgegengesetzten Seite von einem in dem Ausbringkolben verschiebbar angeordneten Hilfskolben begrenzt. Im Ausgangszustand der Mischkapsel ist in der Nebenkammer außer der zweiten Komponente ein Mischkörper untergebracht, der zunächst durch manuelle Verschiebung des Hilfskolbens zur Zerstörung der Folie dient und anschließend den Mischvorgang unterstützt. Um die zum Verschieben des inneren Kolbens samt Kugel erforderliche Volumenverkleinerung zu ermöglichen, ist in der Mischkammer ein Gaskissen vorgesehen.

Bei einer weiteren Ausführungsform der bekannten Mischkapsel befindet sich die Mischkugel zunächst in der Hauptkammer. In diesem Fall ist die in dem Kolben vorhandene Nebenkammer gegenüber der Hauptkammer durch einen Deckel und auf ihrer Rückseite durch einen Balg verschlossen. Durch manuellen Druck auf den Balg wird der Deckel vom Kolben weggedrückt, so dass die beiden Kammern zur Aktivierung der Kapsel in Verbindung gebracht werden.

In beiden Fällen ist zur Aktivierung der Kapsel ein eigener manuell durchzuführender Arbeitsschritt erforderlich. Weiterhin wird ein Gaskissen benötigt, um die zum Lösen des Deckels erforderliche Volumenverkleinerung zu ermöglichen.

Bei einer aus der DE 94 00 374 U1 bekannten Mehrkomponenten-Mischkapsel für Dentalzwecke ist eine erste Komponente in einer Mischkammer und eine zweite, flüssige Komponente in einem Folienbeutel enthalten, der in einer von der Mischkammer durch ein verschiebbares Wandelement getrennten Nebenkammer angeordnet ist. Ein in der Mischkammer vorhandener zylindrischer Mischkörper dient dazu, am Beginn des Mischvorgangs das Wandelement zu verschieben und dadurch den Folienbeutel zusammenzupressen, so dass dieser aufplatzt und die flüssige Komponente durch einen in dem Wandelement vorhandenen Flüssigkeitsdurchlass freigibt.

Eine Schwierigkeit bei dieser Vorrichtung besteht darin, das Wandelement, den Folienbeutel und die Kapsel selbst so zu gestalten und mit derart geringen Toleranzen zu dimensionieren, dass das Wandelement zwar im Lager- und Transportzustand der Kapsel in seiner Ausgangsstellung festgehalten wird, unter Einwirkung des Mischköpers jedoch so weit und mit solcher Kraft verschoben wird, dass der Folienbeutel aufplatzt. Dabei ist zu berücksichtigen, dass eine oftmals nur teilweise erfolgende Entleerung des Folienbeutels zu unerwünschten Änderungen im Mischungsverhältnis und damit zu Verschlechterungen in den Eigenschaften des fertigen Gemisches führt. Nachteilig ist auch, dass sich diese Anordnung nur zum Anmischen, nicht aber auch zum Applizieren der Paste eignet.

In der DE 93 03 268 U1 ist eine Mehrkomponenten-Mischkapsel mit Ausspritzeinrichtung für eine gemischte Masse, vornehmlich für Dentalzwecke beschrieben. Diese Mischkapsel weist einen im Inneren der Kapsel gelegenen Aktivierungsdorn auf, der über Halterungen im Inneren des Kapselkörpers gegen die Richtung des Auspressens verankert ist, sowie ein im Inneren eines Stempels untergebrachtes Flüssigkeitskompartiment, das gegen den Aktivierungsdorn mit einer zerstörbaren Membran abgedichtet ist. Der Aktivierungsdorn ist bündig in den leeren Behälter im Inneren des Stempels eingepasst und dichtet diesen während des Auspressens ab.

Während des Auspressens in Längsrichtung gelangt dabei die Flüssigkeit durch die dünne Kapillare, die im Inneren des Aktivierungsdorns zu liegen kommt, in den Mischraum. Es wird ausgeführt, dass auch während des Mischvorgangs in einem Vibrationsmischer und während des Ausbringens der Masse über die Ausspritzdüse stets ein kleiner, nicht exakt reproduzierbarer Flüssigkeitsrest in der Kapillare verbleibt. Dies beeinträchtigt die Qualität des Mischungsergebnisses.

Eine vergleichbare Mischkapsel ist in der WO 00/30953 beschrieben.

Primär kann die Aufgabe der vorliegenden Erfindung darin gesehen werden, eine verbesserte Mischkapsel bereitzustellen, die die vorgenannten Probleme vermeidet, ohne das gewünschte Mischungsergebnis zu beeinträchtigen.

Eine weitere Aufgabe kann darin gesehen werden, ein Verfahren zum Mischen und Ausbringen von Mischungen aus Mischkapseln bereitzustellen, das eine geringere Anzahl von Arbeitsschritten erfordert.

Diese Aufgabe wird durch eine Mischkapsel und ein Verfahren zur Herstellung einer Mischkapsel gelöst, wie es in den Ansprüchen beschrieben wird.

Mit den Begriffen "umfassen" oder "enthalten" im Sinne der Erfindung wird eine nicht abschließende Aufzählung von Merkmalen eingeleitet. Der Begriff "ein" ist als unbestimmte Mengenangabe im Sinne von "mindestens ein" aufzufassen.

Die erfindungsgemäße Mischkapsel weist dabei u.a. folgende Vorteile auf:

Der in der Mischkapsel vorhandene bewegliche Körper dient nicht nur zum Aktivieren der Kapsel unter Zerstörung der Trennvorrichtung und zur Unterstützung des Mischvorgangs sondern auch als Verdrängungskörper bei der Entleerung.

Die erfindungsgemäße Mischkapsel erlaubt auch das reproduzierbare Anmischen hochviskoser Substanzen.

Da sich der Körper im Ausgangszustand in der Hauptkammer befindet, erfolgt die Aktivierung vorzugsweise automatisch zu Beginn des Mischvorgangs, im Gegensatz zu den aus dem Stand der Technik bekannten manuell durchzuführenden Aktivierungen.

Da ferner die Nebenkammer von der Hauptkammer durch die von dem Körper durchschlagbaren Trennvorrichtung getrennt ist, bildet sie beim anschließenden Mischvorgang einen Teil der Mischkammer selbst. Dadurch ist gewährleistet, dass die in der Nebenkammer enthaltende zweite Komponente vollständig in das entstehende Gemisch eingeht.

Zudem führt die Vereinigung von Haupt- und Nebenkammer zu einer vorteilhaften Vergrößerung des zur Verfügung stehenden Mischvolumens.

In der letzten Phase des Ausbringvorgangs unterstützt der Körper die nahezu vollständige Entleerung des von Hauptkammer und Nebenkammer gebildeten Innenraums der Mischkapsel.

Weiterhin vorteilhaft ist die geringe Anzahl und einfache Gestaltung der Bauteile der Mischkapsel.

Vorteilhaft im Vergleich zu der beispielsweise aus der DE 23 24 296 A bekannten Mischkapsel ist, dass durch die fehlende Notwendigkeit des Anbringens eines Folienkissens auf der Außenseite der Kartusche verbunden mit einer Spange zu dessen Halterung, die Kapsel einen geringeren Radialdurchmesser bei gleichem Volumen aufweisen kann. Dies erleichtert das Applizieren der Mischung bzw. Masse aus der Kapsel in eine Kavität eines Zahnes.

Gegebenenfalls befinden sich in der Mischkapsel mehrere frei bewegliche Körper.

Vorzugsweise ist der bewegliche Körper kugelförmig ausgestaltet. Der Durchmesser der Kugel liegt vorzugsweise im Bereich von 4 bis 10 mm, besonders bevorzugt im Bereich von 5 bis 8 mm.

Denkbar ist aber auch jede andere Gestaltung des Köpers, beispielsweise eine eiförmige oder linsenförmige Gestaltung oder eine Gestaltung in Form eines platonischen Körpers. In Abhängigkeit von der gewählten Trennschicht kann eine derartige Gestaltung die Trennschicht leichter zerstören und ermöglicht gegebenenfalls eine geringere Masse und/oder Größe des Körpers.

Die Gestaltung eines Körper mit Ecken und Kanten kann auch beim Ausbringen der Mischung aus der Kapsel günstig sein. Ein solcher Körper lässt sich nicht einheitlich in die Nebenkammer einpassen. Es kommt somit zu unterschiedlich breiten Abständen zwischen Körperoberfläche und Innenoberfläche der Nebenkammer. Diese erleichtern den Fluss der Mischung beim Ausbringen in Richtung Ausbringtülle.

Es kann auch von Vorteil sein, den Körper ringförmig auszubilden. In Abhängigkeit von der Größe des Rings kann dieser mehr oder weniger in die Nebenkammer eindringen und dort als Verdrängungskörper wirken.

In einer weiteren Ausführungsform ist der Kolben derart gestaltet, dass er sich beim Ausbringen verformen, insbesondere plastisch verformen lässt.

Dies kann dadurch erreicht werden, dass der Kolben, der mindestens eine Nebenkammer aufweist, aus einem verformbaren Material besteht oder ein solches umfasst.

Hilfreich ist auch eine Gestaltung in einer solchen geometrischen Form, die die Verformung erleichtert.

Als günstig hat sich eine Gestaltung des Kolbens in Form eines nach zwei Seiten offenen Hohlkolbens mit einer ersten und einer zweiten Einbuchtung erwiesen, wobei die erste Einbuchtung zusammen mit der Trennvorrichtung die Nebenkammer bildet.

Eine derartige Form lässt sich beispielsweise durch Eindrücken der Bodenfläche eines aus einem verformbaren Material bestehenden Bechers erreichen. Vorzugsweise erfolgt das Eindrücken durch einen Stempel.

Denkbar ist auch die Fertigung eines derartigen Kolbens durch Spritzgießen oder Tiefziehen und/oder Thermoverformung eines verformbaren Materials.

Zur besseren Abdichtung des Kolbens gegen die Kapselwand weist der Kolben vorzugsweise eine oder mehrere Dichtlippen auf.

Eine zusätzliche Dichtwirkung kann durch eine Gestaltung erreicht werden, die beim Applikationsvorgang ein Aufspreizen des kollabierenden Kolbens verbunden mit einem Anpressen an die Kapseiwand erlaubt.

U.a. hat sich die Kombination eines linsenförmigen Körpers in Verbindung mit einem verformbaren Kolben bewährt.

Um ein vollständigeres Ausbringen der Mischung aus der Mischkapsel zu gewährleisten, kann es auch vorteilhaft sein, auf die Außenseite des Kolbenbodens eine Anformung anzubringen. Eine solche Anformung kann in Gestalt einer Verdickung des Kolbenbodens oder als ein Distanzstück, vorzugsweise zylinderförmig, vorliegen.

Da zum Ausbringen der Mischung eine Applikationsvorrichtung erforderlich ist, welche über eine verschiebbare Kolbenstange bzw. einen Stempel mit definierter, im Handel standardisierter Länge verfügt, ist es gegebenenfalls erforderlich, die axiale Länge des Stempels über die Anformung zu verlängern. Auf diese Weise kann sichergestellt werden, dass der verformbare Kolben bis in den Bereich der Ausbringtülle verschoben werden kann. Weiterhin vorteilhaft ist, dass sich das Risiko, dass die Kolbenstange bzw. der Stempel der Applikationsvorrichtung beim Verformen des Kolbens der Mischkapsel eingeklemmt wird, verringert.

Das Gewicht des beweglichen Körpers ist dabei derart auf die Beschaffenheit der Trennvorrichtung eingestellt, dass die Trennvorrichtung bei herkömmlichem Transport und normaler Handhabung durch den beweglichen Körper nicht beschädigt wird. Erst ab in Kapsel-Mischgeräten üblich auftretenden Beschleunigungswerten von beispielsweise 100 bis 500 g (1g = 9.81 ms⁻²), vorzugsweise 200 bis 400 g kann die Trennvorrichtung durchschlagen werden.

Brauchbare Kugel- bzw. Körpermaterialien haben eine Dichte im Bereich von 2 bis 12 g/cm³. Die Masse der Kugel liegt üblicherweise im Bereich von 0,1 bis 10 g, vorzugsweise im Bereich von 0,3 bis 3,0 g.

Die Form der Nebenkammer hat vorzugsweise im wesentlichen die Form einer Halbkugel mit einem gegenüber dem Körper etwas größeren Radius. Dies ist für eine möglichst restlose Entleerung der Mischkapsel günstig. Ferner kann es für die Entleerung der Mischkapsel insbesondere bei hochviskosem Material günstig sein, wenn die Nebenkammer kanalförmige Vertiefungen beispielsweise in Form von Nuten aufweist. Diese Vertiefungen verlaufen vorzugsweise vom Boden der Nebenkammer in Richtung Stirnfläche der Nebenkammer..

Das zum Mischen zur Verfügung stehende Gesamtvolumen der Mischkapsel liegt üblicherweise im Bereich von 0,5 bis 5 ml, insbesondere 1 bis 3 ml. Vorzugsweise ist das Volumen der Nebenkammer geringer als das Volumen der Hauptkammer. Das Volumen der Nebenkammer beträgt üblicherweise 0,05 bis 0,5 ml, vorzugsweise 0,1 bis 0,3 ml.

Gegebenenfalls kann der maximale Durchmesser eines von der Kugelform abweichend geformten Körpers, beispielsweise in einer Form mit Ecken und Kanten, auch etwas größer sein als der Durchmesser der Nebenkammer. Diese Ausführungsform ist insbesondere dann sinnvoll, wenn der Körper aus einem verformbaren Material besteht oder ein solches umfasst. In diesem Fall würde während des Aktivierens der Mischkapsel der sich relativ zur Mischkapsel bewegende Körper durch die rasche Bewegung derart verformt, dass er letztlich beim Ausbringvorgang in die Nebenkammer als Verdrängungskörper eindringen kann.

Die Gestaltung des Körpers aus einem verformbaren Material ist auch insofern günstig, da anfangs, vor dem Aktivieren der Mischkapsel, der Körper eine kantige Gestalt aufweisen kann, die während des Aktivierens zunächst das Öffnen der Trennvorrichtung erleichtert. Während des Mischvorgangs kommt es schließlich zu einer zunehmend abgerundeten Gestaltung des Körpers, der besser in die Nebenkammer eindringen kann, andererseits aber durch die Abrundung zunehmend weniger zur Folienabrasion führt.

Vorteilhaft ist es, wenn die Trennvorrichtung an einer die Nebenkammer begrenzenden Ringfläche des Kolbens haftet und der Übergang zwischen der Ringfläche und der Innenwand der Nebenkammer einen scharfkantigen Bereich aufweist.

Dieser scharfkantige Bereich verläuft vorzugsweise über einen Teil des Umfangs, vorzugsweise im wesentlichen von 60° bis 120°, besonders bevorzugt von 70° bis 90°. Der Übergang zwischen Ringfläche und der Innenwand der Nebenkammer ist vorzugsweise im übrigen Bereich verrundet. Diese Ausführungsform vermeidet das vollständige Abreißen der Folie.

In einer besonderen Ausführungsform weist die Trennvorrichtung eine Sollbruchstelle auf, die unabhängig von der Beschaffenheit des oben beschriebenen Randbereichs zu einem gezielten und sicheren Öffnen der Nebenkammer beiträgt. Die Vorschädigung der Trennvorrichtung bzw. die Präparierung einer Sollbruchstelle kann beispielsweise durch Strahlung wie Laserstrahlung, mechanisch durch Anritzen oder Einschneiden mit einem Messer oder thermisch durch Anschmelzen oder Einritzen mit einem beheizbaren Messer erfolgen.

Die Präparierung wird vorzugsweise nur am gegebenenfalls vorhandenen Kunststoffteil der Trennvorrichtung, d.h. an dem auf einer oder auch auf beiden Seiten einer Metallschicht oder SiOₓ-haltigen Schicht vorhandenen Trägermaterial vorgenommen. Damit bleibt die Dichtigkeit der gegebenenfalls vorhandenen Metall- oder SiOₓ-haltigen Schicht erhalten.

Die Form der Präparierung ist dabei beliebig, erfolgt aber vorzugsweise in einer Form, die ein Abreißen der Trennvorrichtung oder Teilen davon nach oder beim Durchschlagen der Trennvorrichtung durch den Körper vermeidet.

Ein Präparieren der Trennvorrichtung in der Form von zwei oder mehr sich in der Symmetrieachse der Kapsel kreuzenden Linien hat sich als günstig erwiesen.

In diesem Fall platzt die Trennschicht nur an einer definierten Stelle auf. Dadurch wird vermieden, dass die Trennschicht oder Teile davon in das Gemisch gelangen und den Ausbringvorgang behindern.

Brauchbar ist auch eine sternförmige Präparierung mit sich verzweigenden Ästen. Eine derartige Präparierung erleichtert den Mischvorgang, da keilförmigen Folienteile der Trennvorrichtung im Bereich der Wandung der Nebenkammer eine kürzere Sehnenlänge aufweisen, wodurch sich die Folienbestandteile beim Mischen leichter umklappen lassen.

Günstig ist auch eine Präparierung bei der ein Folienteil die Umrisse eines Bowling-Kegels aufweist, wobei der Kegelkopf kreisförmig gestaltet ist und sich dessen Mittelpunkt auf der Längsachse der Kartusche befindet. Auch diese Präparierung erleichtert das weitgehend vollständige Öffnen der Trennvorrichtung und damit den Zugang zur Nebenkammer.

Geeignete Präparierungen der Trennvorrichtung sind in den Figuren dargestellt.

Ein weiterer Vorteil derartiger Sollbruchstellen besteht darin, dass auch verhältnismäßig dicke Folien, auch Mehrschichtfolien im Bereich von 50 bis 80 µm, vorzugsweise 60 bis 70 µm mit geringer Kraft (kleinere Masse des Körpers) durchstoßen werden können.

Die Trennvorrichtung liegt vorzugsweise in Form einer ein- oder mehrlagigen Folie, besonders bevorzugt in Form einer Verbundfolie oder auch Siegelfolie vor. Eine dreilagige Folie, umfassend eine Kunststoff-Außenschicht, mindestens eine Sperrschicht, vorzugsweise aus Kunststoff und eine Siegelschicht hat sich als günstig erwiesen, wobei es sich bei der Siegelschicht auch um eine Kunststofffolie oder einen Siegellack handeln kann.

Die Folie umfasst vorzugsweise mindestens eine Metallschicht, wie eine Aluminiumschicht und/oder Goldschicht, und mindestens eine, gegebenenfalls zwei, drei oder mehrere Kunststoffschichten.

Als Kunststoff sind beispielsweise geeignet: PE, PP, PET, PTFE, PVC, Polyamide.

Ferner kann die Trennvorrichtung anstelle oder zusätzlich zur Metallfolie plasmapolymerisierte Schichten, wie Kohlenwasserstoff-haltige Schichten oder keramische Barriereschichten, wie SiOₓ-Schichten aufweisen.

Die Trennvorrichtung wird beispielsweise durch Heißsiegeln, Kleben, Ultraschallverschweißen oder Hochfrequenzschweißen an der ringförmigen Stirnfläche des Kolbens befestigt.

Als Außenschicht sind beispielsweise geeignet Schichten, umfassend PET, PP, PE und/oder PA, als Sperrschicht, Schichten, umfassend Al und/oder SiOₓ, als Siegelschicht, Schichten, umfassend HDPE, LDPE und/oder PP. Eine Schichtung PET - AI - LDPE oder PA - AI - LDPE hat sich als günstig erwiesen.

Die Schichtdicken der einzelnen Folien (Außenschicht, Sperrschicht, Siegelschicht) liegen im Bereich von 5 bis 60 µm, vorzugsweise von 8 bis 50 µm.

Die Trennvorrichtung kann ferner zur Aufnahme einer dritten Komponente beispielsweise in Form eines Folienkissens ausgebildet sein.

Alternativ kann an der Außenwand der Mischkapsel ein Folienkissens zur Aufnahme einer dritten Komponente befestigt sein. Die Befestigung kann beispielsweise über eine flexible Spange oder durch eine Klebung erfolgen. Bei dieser Ausführungsform befindet sich in der Außenwand der Mischkapsel eine Bohrung über die die dritte Komponente in die Hauptkammer eingebracht werden kann. Das Überführen der dritten Komponente erfolgt vorzugsweise durch Druckausübung auf das äußere Folienkissen. Das Folienkissen, das zur Abdichtung der Bohrung auf dieser angeordnet ist, platzt hierbei im Bereich der Bohrung auf und entleert seinen Inhalt in die Hauptkammer. Eine vergleichbare Ausführungsform ist in der DE 23 24 296 A beschrieben.

Vorteilhafte Werkstoffe für den Kolben der Mischkapsel umfassen Metalle, wie eloxiertes Aluminium, Glas, Keramik wie Zirkonoxid, Kunststoffe und/oder - zur Verringerung der Durchlässigkeit - gegebenenfalls metallisierte oder mit anderen Materialien, die Sperrschichtwirkung haben, bedampfte oder beschichtete Kunststoffe. Als Kunststoffe sind beispielsweise möglich: PE, PP, PET, PTFE, PVC, EVA, Polyamide.

Weiterhin sind Kombinationen der vorgenannten Materialien wie ein Metallinsert, vorzugsweise aus Aluminium, denkbar, das mit dem Kunststoff äußerlich und innerlich umgeben ist. Derartige Teile sind im Spritzgussverfahren herstellbar.

Der Kolben kann in einem 2-Komponenten Spritzgussverfahren hergestellt werden. Hierbei wird beispielsweise zunächst ein Inlay gefertigt, das anschließend mit beispielsweise PE umspritzt wird.

Für den Körper der Mischkapsel sind insbesondere abriebfeste Materialien, wie Kunststoffe mit hoher Dichte, beispielsweise PTFE, anorganische Materialien mit gegebenenfalls keramischen Eigenschaften, wie Glas, Aluminiumoxid oder Zirkonoxid, Metalle wie Fe, Ti, V, AI oder Edelstahl geeignet. Der Körper ist gegebenenfalls kunststoffbeschichtet, wobei sich Beschichtungen mit PE, PP, PA, PTFE, silikonhaltigen Kunststoffen und/oder Titannitrit als günstig erwiesen haben.

Die in der Hauptkammer, der Nebenkammer und/oder der gegebenenfalls in der Trennvorrichtung oder dem separat auf der Außenwand der Mischkapsel angeordnetem Folienkissen enthaltenden Komponenten umfassen sowohl Flüssigkeiten als auch Feststoffe vorzugsweise in Pulver- oder Granulatform. Möglich sind aber auch pastenförmige Grundsubstanzen.

Um eine Dämpfung des frei beweglichen Körpers durch die sich in der Hauptkammer befindlichen Substanzen beim Aktivierungsvorgang zu vermeiden, kann es auch günstig sein, wenn diese Substanzen in gepresster Form vorliegen. Der Pressling befindet sich vorzugsweise zwischen Stirnseite der Kartusche und Körper.

Die Feststoffe umfassen inerte Füllstoffe, wie feingemahlenen Quarz, SiOₓ haltige Substanzen, Gläser, reaktive Füllstoffe aller Art, wobei die Feststoffe gegebenenfalls oberflächenmodifiziert vorliegen können.

Die Flüssigkeiten umfassen insbesondere matrixbildende, polymerisierbare Substanzen, beispielsweise Polysäuren umfassend Acrylsäure-, Methacrylsäure- und Maleinsäurederivate sowie Copolymere davon.

Vorzugsweise eignet sich die Mischkapsel zum Lagern, Mischen und Ausbringen von Glasionomerzementen.

Die Ausbringtülle an der Mischkapsel setzt gegebenenfalls exzentrisch an der Hauptkammer an. Von Vorteil kann auch die Ausbildung einer oder mehrerer Rinnen sein, die in die Ausbringtülle münden. Eine derartige Ausgestaltung kann für eine ungestörte Entleerung der Mischkapsel günstig sein.

Die Ausbringtülle ist ferner vorzugsweise verschließbar ausgestaltet. Denkbare Ausführungsformen sind beispielsweise in der EP 0 157 121 A beschrieben, wo die Ausbringtülle schwenkbar gelagert ist, so dass je nach Stellung der Ausbringtülle diese verschlossen oder geöffnet ist. Ebenfalls denkbar ist die Verwendung einer Rüsselverdrängungskappe zum Verschließen der Ausbringtülle.

Die Mischkapsel weist eine Codierung auf. Geeignete Codierungen sind beispielsweise farbliche Kennzeichnungen beispielsweise in Form von Farbringen, Etiketten, Bedruckungen oder elektronisch lesbare Kodierungen (Barcode). Denkbar ist auch das Anbringen mehrerer Kodierungen. Die Kodierung kann dabei Informationen über die Mischzeit, das Material, den Hersteller und/oder das Verfallsdatum enthalten.

Eine Codierung der Mischkapsel bzw. der darin befindlichen Substanzen über eine farbige Gestaltung der Ausbringtülle ist insbesondere dann vorteilhaft, wenn in der Mischkapsel lichtempfindliche Substanzen gelagert werden sollen. Um diese vor Lichteinfall zu schützen, ist es oftmals notwendig, den Kolben und/oder die Kartusche schwarz einzufärben. Sollen in der Kartusche unterschiedlich gefärbte Substanzen gelagert werden, kann eine Identifikation dieser Substanzen über die Farbe des nunmehr schwarz gefärbten Kolbens und/oder der Kartusche nicht mehr erfolgen.

Vorzugsweise erfolgt die farbliche Kennzeichnung bzw. Einfärbung durch ein 2K-Spritzverfahren (2-Komponenten Spritzverfahren) von Ausbringtülle und Kartusche. Damit verbunden sind eine Reduzierung der Teileanzahl der Kapsel und Kosteneinsparung im Fertigungsprozess.

Der Kolben kann auch gegebenenfalls eine verformbare, dämpfende Geometrie aufweisen, um das durch den Körper beim Aktivieren in einem geeigneten Mischgerät entstehende Geräusch abzuschwächen. Dies kann beispielsweise durch eine ringförmige, gegebenenfalls spitz zulaufende Erhebung am Kolbenende erreicht werden.

Gegenstand der Erfindung ist auch die Verwendung der Mischkapsel zum Mischen von Dentalwerkstoffen, wobei der Mischvorgang folgende Schrictte umfasst:
a) Bereitstellen einer Mischkapsel nach eineim der Ansprüche 1 bis 17,
b) Einlegen der Mischkapsel in ein Mischgerät mit einem Kapselhalter,
c) Beschleunigen der Mischkapsel vorzugsweise durch rasche translatorische und/oder rotatorische Bewegung, wodurch die die mindestens zwei durch eine Trennvorrichtung getrennten Kammern unter Bildung eines Mischraumes geöffnet werden,
d) Entnahme der Mischkapsel aus dem Mischgerät, insbesondere dentales Hartgewebe bzw. eine Zahnkavität.

Eine herkömmliche Applikationsvorrichtung umfasst eine Halterung zum Einlegen der Nüschkapsel und eine verschiebbare Kolbenstange, die so dimensioniert ist, dass sie den Kolben der Mischkapsel in Richtung der Ausbringöffnung bewegen kann.

Bevorzugte Ausführungsbeispiele der Mischkapsel werden nachstehend anhand der Zeichnungen erläutert.
- Figur 1: zeigt einen Längsschnitt durch eine Mischkapsel im Ausgangszustand,
- Figur 2: die gleiche Kapsel am Ende des Ausbringvorgangs und
- Figur 3: eine der Figur 1 ähnliche Darstellung in einer anderen Ausführungsform.
- Figur 4, 5: zeigen mögliche Präparierungen der Trennvorrichtung in Aufsicht.

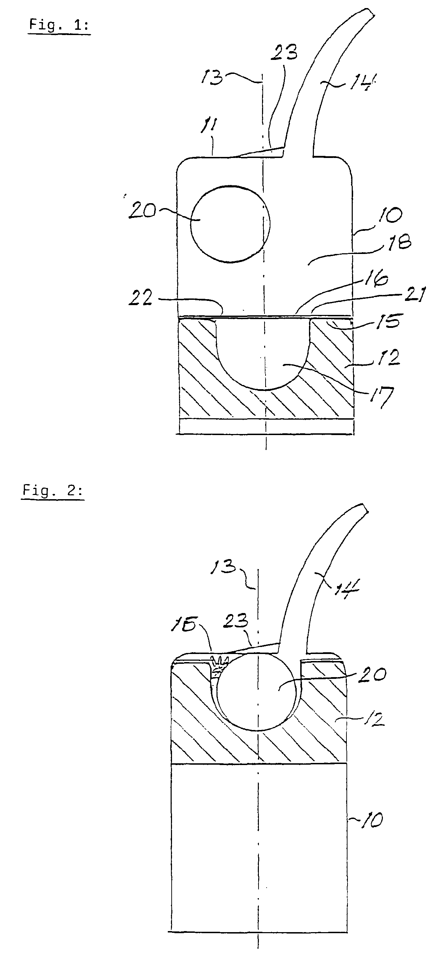

Gemäß Figur 1 besteht die Mischkapsel aus einer zylindrischen Kartusche 10, die an ihrem vorderen Ende durch eine Stirnwand 11 und and ihrem hinteren Ende durch einen Kolben 12 verschlossen ist. An der Stirnwand 11 ist eine gekrümmte Ausbringtülle 14 exzentrisch zur Kartuschenachse 13 angeformt. Die Ausbringtülle 14 ist gegebenenfalls verschließbar ausgebildet, beispielsweise mit einem Verdrängungsstopfen.

Der Kolben 12 hat eine axiale wesentliche Wandstärke und ist mit einer zur Kartuschenachse 13 koaxialen, im wesentlichen halbkugelförmigen Vertiefung versehen, die durch eine an der ringförmigen vorderen Stirnfläche 15 des Kolbens 12 befestigten Trennvorrichtung 16 verschlossen ist. Die Trennvorrichtung 16 trennt die von der Vertiefung gebildeten Nebenkammer 17 vom übrigen Innenraum der Kartusche, der hier als Hauptkammer 18 bezeichnet wird.

Im Ausgangs- und/oder Lagerzustand enthält die Hauptkammer 18 eine erste, beispielsweise pulverförmige Komponente und die Nebenkammer 17 eine zweite, beispielsweise flüssige Komponente des herzustellenden Gemisches.

Die Mischkapsel enthält ferner einen frei beweglichen, vorzugsweise kugelförmigen Körper 20, der sich im Ausgangs- und/oder Lagerzustand der Kapsel in der Hauptkammer 18 befindet und dessen Radius etwas kleiner ist als der Radius der die Nebenkammer 17 bildenden halbkugelförmigen Vertiefung. Der Körper 20 und die Nebenkammer 17 können auch andere, von der Kugel- bzw. Halbkugelform abweichende Formen haben. Frei beweglich heißt, dass sich der Körper grundsätzlich in alle Richtungen bewegen lässt und nicht durch irgendwelche Führungsschienen in seiner Bewegung beeinträchtigt ist.

Der Übergang zwischen der die Nebenkammer 17 bildenden Vertiefung und der ringförmigen Stirnfläche 15 des Kolbens 12 ist, wie in Figur 1 angedeutet, über einen Winkelbereich 21 scharfkantig, im übrigen Bereich 22 verrundet, ausgebildet.

Die Scharfkantigkeit kann auch durch eine Zahnung erzeugt sein.

Die Verrundung verhindert, dass die Trennvorrichtung während des Mischvorgangs an diesem Stirnflächen-Innenrandbereich abreißt, während der scharfkantige Bereich 21 dazu dient, an der Trennvorrichtung 16 einen Initialriß auszubilden.

Ist in einer anderen Ausführung der Rand der Nebenkammer 17 durchgehend verrundet, so kann die Trennvorrichtung 16 dadurch zum Reißen gebracht werden, dass sie durch den Aufprall des Körpers 20 zu Beginn des Mischvorgangs vorzugsweise an der Sollbruchstelle überdehnt wird.

Zum Gebrauch wird die Mischkapsel, die in dem in Figur 1 dargestellten Zustand vom Hersteller geliefert wird, in ein übliches Kapsel-Mischgerät mit einem Kapselhalter eingelegt, in dem sie beispielsweise längs der Kartuschenachse 13 in Schwingungen versetzt wird. Neben rein translatorischen Bewegungen der Kapsel sind rotatorische Bewegungen möglich, gegebenenfalls in Kombination mit translatorischen Bewegungen. Dabei trifft der Körper 20 auf die Trennvorrichtung 16 und durchschlägt sie. Dadurch werden Hauptkammer 18 und Nebenkammer 17 zu einem gemeinsamen Mischraum verbunden. In diesem Mischraum werden während des weiteren Mischvorgangs die Komponenten zusammengemischt.

Zum Ausbringen des fertigen Gemisches wird der Kolben 12 in einer handelsüblichen Applikationsvorrichtung nach vorne verschoben bis er die in Figur 2 gezeigte Stellung erreicht.

Da die die Nebenkammer 17 bildende Vertiefung im wesentlichen halbkugelförmig ausgebildet ist und einen etwas größeren Radius hat als der kugelförmige Körper 20, tritt dieser in die Vertiefung ein und wirkt dabei als Verdrängungskörper. Dadurch kann der Mischraum im wesentlichen vollständig entleert werden.

Ist die Nebenkammer 17 zur Kartuschenachse 13 koaxial und die Ausbringtülle 14 exzentrisch angeordnet, behindert der Körper 20 den Ausbringvorgang nicht.

Um zu gewährleisten, dass auch Teile des Gemisches, die sich auf der der Ausbringtülle gegenüberliegenden Seite des Körpers 20 sammeln, in die Tülle 14 gelangen, kann in der Stirnwand 11 der Kartusche 10 mindestens eine sich in Richtung der Ausbringtülle 14 vertiefende Rinne 23 eingeformt sein.

In einer weiteren (nicht gezeigten) Variante kann die Ausbringtülle 14 koaxial zur Kartuschenachse 13 angeordnet sein.

Damit der Körper 20 bei dieser Ausführungsform den Auslaß für das fertige Gemisch nicht blockiert, sind in die Stirnwand 11 der Kartusche 10 vorzugsweise mehrere Rinnen eingeformt, die in unterschiedliche Richtungen auf die Ausbringtülle 14 verlaufen.

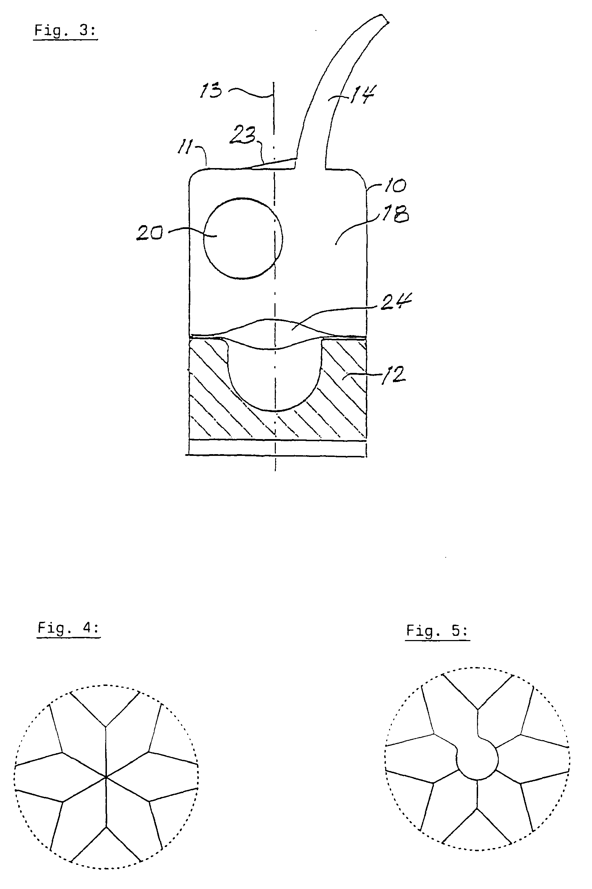

Das in Figur 3 gezeigte Ausführungsbeispiel unterscheidet sich von dem nach Figur 1 dadurch, dass anstelle der Trennvorrichtung 16 ein aus zwei Folien bestehendes Folienkissen 24 vorgesehen ist, das eine dritte Komponente enthalten kann.

Die Unterseite des Kissens 24 kann bei einer 2-Komponenten-Variante bis auf den Kolbengrund tiefgezogen sein. Dadurch kann eine verbesserte Diffusionssperre zum Kolben erreicht werden.

Beim Beginn des Mischvorgangs durchschlägt der Körper 20 das Folienkissen 24, so dass alle drei Komponentewin dem dann zusammenhängenden, aus Hauptkammer 18 und Nebenkammer 17 gebildeten Mischraum vermischt werden können.

Wie in der Zeichnung dargestellt, weist der Kolben 12 eine wesentliche Wandstärke auf. Dieses hat den Vorteil, dass der Kolben 12 auch dann, wenn er aus Kostengründen aus Kunststoff gefertigt ist, eine gute Diffusionssperre darstellt.

In Figur 4 und 5 sind in Aufsicht mögliche Präparierungen der Trennvorrichtung 16 dargestellt, die es ermöglichen, dass die Mischkapsel einfach und weitgehend vollständig aktiviert werden kann, ohne dass Bestandteile der Trennvorrichtung beim Mischen in die gemischte Masse eingebettet werden. Vorzugsweise erfolgt die Präparation durch eine Vorschädigung der für die Trennvorrichtung verwendeten Folie, beispielsweise durch Strahleneinwirkung.

Die Mischkapsel wird üblicherweise zusammen mit einer weiteren Vorrichtung verwendet. Unter Vorrichtung im Sinne der Erfindung ist zum einen ein Gerät zu verstehen, das zur Aktivierung der Mischkapsel eingesetzt wird, vorzugsweise ein Gerät, das die Mischkapsel in translatorische und/oder rotatorische Bewegung versetzen kann, zum anderen, eine Vorrichtung, die das Ausbringen der gemischten Masse aus der Mischkapsel erleichtert, vorzugsweise eine Vorrichtung, umfassend einen Stempel bzw. eine verschiebbare Kolbenstange.

### Bezugszeichenliste

- 10: Kartusche
- 11: Stirnwand
- 12: Kolben
- 13: Kartuschenachse
- 14: Ausbringtülle
- 15: Stirnfläche
- 16: Trennvorrichtung/Folie
- 17: Nebenkammer
- 18: Hauptkammer
- 20: Körper
- 21: gegebenenfalls scharfkantiger Bereich
- 22: gegebenenfalls verrundeter Bereich
- 23: Rinne
- 24: Folienkissen

## Patentansprüche

1. Mischkapsel, umfassend eine Kartusche (10), eine Ausbringtülle (14) und einen Kolben (12), der in der Kartusche verschiebbar angeordnet ist, eine abgedichtete Hauptkammer (18) zur Aufnahme einer ersten Komponente, eine in dem Kolben (12) vorgesehenen Nebenkammer (17) zur Aufnahme einer zweiten Komponente, mindestens einen frei beweglichen Körper (20) und eine die Nebenkammer (17) von der Hauptkammer (18) trennende, von dem Körper (20) während des Mischvorgangs zu durchschlagende Trennvorrichtung (16), wobei der Körper (20) bei geschlossener Trennvorrichtung (16) in der Hauptkammer (18) angeordnet ist, und die Nebenkammer (17) und der Körper (20) so gestaltet sind, dass der Körper (20) beim Ausbringvorgang als Verdrängungskörper im wesentlichen zur vollständigen Entleerung in die Nebenkammer (17) eintreten kann, und wobei die Mischkapsel eine Codierung aufweist.

2. Mischkapsel nach Anspruch 1, wobei die Codierung über die Ausbringtülle (14) erfolgt.

3. Mischkapsel nach einem der vorstehenden Ansprüche, wobei die Ausbringtülie (14) schwenk- oder drehbar gelagert ist.

4. Mischkapsel nach einem der vorstehenden Ansprüche, wobei Ausbringtülle (14) und Kartusche (10) in einem 2K-Spritzgußverfahren hergestellt werden.

5. Mischkapsel nach einem der vorstehenden Ansprüche, wobei der Körper (20) kugelförmig gestaltet ist.

6. Mischkapsel nach einem der vorstehenden Ansprüche, wobei die Nebenkammer (17) im wesentlichen die Form einer Halbkugel mit einem gegenüber dem Körper (20) etwas größeren Radius hat.

7. Mischkapsel nach einem der vorstehenden Ansprüche, wobei der Kolben (12) verformbar ist.

8. Mischkapsel nach einem der vorstehenden Ansprüche, wobei die Trennvorrichtung (16) an einer die Nebenkammer (17) begrenzenden Ringfläche (15) des Kolbens (12) haftet, und der Übergang zwischen der Ringfläche (15) und der Innenwand der Nebenkammer (17) einen scharfkantigen Bereich (21) aufweist und/oder der Übergang zwischen der Ringfläche (15) und der Innenwand der Nebenkammer (17) im übrigen Bereich (22) verrundet ist.

9. Mischkapsel nach einem der vorstehenden Ansprüche, wobei die Trennvorrichtung (16) zur Ausbildung mindestens einer Sollbruchstelle vorpräpariert ist.

10. Mischkapsel nach Anspruch 9, wobei die Vorpräparierung sternförmig, sternförmig zur Stirnfläche der Nebenkammer hin verzweigt ist und/oder einen kegelförmigen Bereich aufweist.

11. Mischkapsel nach einem der vorstehenden Ansprüche, wobei die Ausbringtülle (14) exzentrisch an der Hauptkammer (18) ansetzt.

12. Mischkapsel nach Anspruch 9, wobei in der mit der Ausbringtülle (14) versehenen Stirnwand der Hauptkammer (18) mindestens eine in die Ausbringtülle (14) mündende Rinne (23) ausgebildet ist und/oder in die Nebenkammer mindestens eine Vertiefung eingearbeitet ist.

13. Mischkapsel nach einem der vorstehenden Ansprüche mit einer weiteren Kammer zur Aufnahme einer dritten Komponente, wobei die weitere Kammer entweder als ein in der Trennvorrichtung (16) ausgebildetes Kissen (24) vorliegt oder in Kissenform an der Außenwand der Mischkapsel befestigt ist.

14. Mischkapsel nach einem der vorstehenden Ansprüche, wobei die Trennvorrichtung (16) mindestens eine metallhaltige Folie und/oder kohlenwasserstoffhaltige Schichten und/oder keramische Barriereschichten wie SiOₓ₋Schichten umfasst.

15. Mischkapsel nach einem der vorstehenden Ansprüche, wobei der Kolben (12) Materialien gewählt aus Metall, Glas, Keramik oder Kunststoff, gegebenenfalls kunststoffbeschichtetes Metall, Glas und Keramik oder metallisierten Kunststoff umfasst.

16. Mischkapsel nach einem der vorstehenden Ansprüche, wobei der Körper (20) Materialien gewählt aus Glas, Keramik, PTFE, gegebenenfalls kunststoffbeschichtetem Metall oder Edelstahl umfasst.

17. Mischkapsel nach einem der vorstehenden Ansprüche, die als erste und/oder zweite Komponente eine Substanz enthält, gewählt aus Feststoffen und/oder Flüssigkeiten.

18. Verwendung einer Mischkapsel nach einem der vorstehenden Ansprüche zum Mischen von Dentalwerkstoffen, insbesondere von Glasionomerzementen.

19. Verwendung nach Anspruch 18, wobei das mischvorgang folgende Schritt umfasst:
a) Bereitstellen einer Mischkapsel nach einem der Anspruch 1 bis 17,
b) Einlegen der Mischkapsel in ein Mischgerät mit einem Kapselhalter,
c) Beschleunigen der Mischkapsel durch translatorische und/oder rotatorische Bewegung, wodurch die mindestens zwei durch eine Trennvorrichtung getrennten Kammern unter Bildung eines Mischraumes geöffnet werden,
d) Entnahme der Mischkapsel aus dem Mischgerät.

20. Mischgerät mit einem Kapselhalter, umfassend eine Mischkapsel nach einem der Ansprüche 1 bis 15.

21. Verfahren zur Herstellung einer Mischkapsel nach einem der Ansprüche 1 bis 15, umfassend ein 2-Komponenten Spritzgussverfahren.

## Claims

1. Mixing capsule, comprising a cartridge (10), a dispensing spout (14) and a piston (12) which is arranged displaceably in the cartridge, a sealed main chamber (18) for receiving a first component, an auxiliary chamber (17) which is provided in the piston (12) and receives a second component, at least one freely movable body (20), and a separating device (16) which separates the auxiliary chamber (17) from the main chamber (18) and through which the body (20) is to penetrate during the mixing procedure, the body (20) being arranged in the main chamber (18) when the separating device (16) is closed, and the auxiliary chamber (17) and the body (20) being designed in such a way that, during the dispensing operation, the body (20) can pass into the auxiliary chamber (17) as a displacement body substantially for complete emptying, and the mixing capsule has a coding.

2. The mixing capsule according to Claim 1, in which the coding is made via the dispensing spout (14).

3. The mixing capsule according to one of the preceding claims, in which the dispensing spout (14) is mounted so as to be able to swivel or pivot.

4. The mixing capsule according to one of the preceding claims, in which dispensing spout (14) and cartridge (10) are produced in a two-component injection-moulding method.

5. The mixing capsule according to one of the preceding claims, in which the body (20) is of spherical design.

6. The mixing capsule according to one of the preceding claims, in which the auxiliary chamber (17) has substantially the shape of a hemisphere with a slightly greater radius compared to the body (20).

7. The mixing capsule according to one of the preceding claims, in which the piston (12) is deformable.

8. The mixing capsule according to one of the preceding claims, in which the separating device (16) adheres to an annular surface (15) of the piston, delimiting the auxiliary chamber (17), and the transition between the annular surface (15) and the inner wall of the auxiliary chamber (17) has a sharp-edged region (21), and/or the transition between the annular surface (15) and the inner wall of the auxiliary chamber (17) is rounded in the remaining region (22).

9. The mixing capsule according to one of the preceding claims, in which the separating device (16) is prepared in advance in order to form at least one desired breaking point.

10. The mixing capsule according to Claim 9, in which the advance preparation is star-shaped, is branched in a star shape towards the end face of the auxiliary chamber and/or has a skittle-shaped area.

11. The mixing capsule according to one of the preceding claims, in which the dispensing spout (14) is fitted eccentrically on the main chamber (18).

12. The mixing capsule according to Claim 9, in which at least one channel (23), which opens into the dispensing spout (14), is formed in that end wall of the main chamber (18) which is provided with the dispensing spout (14) and/or at least one recess is formed in the auxiliary chamber.

13. The mixing capsule according to one of the preceding claims, with a further chamber for receiving a third component, the further chamber being provided either as a cushion (24) formed in the separating device (16) or being secured in cushion form on the outer wall of the mixing capsule.

14. The mixing capsule according to one of the preceding claims, in which the separating device (16) comprises at least one metal-containing foil and/or hydrocarbon-containing layers and/or ceramic barrier layers, such as SiOₓ layers.

15. The mixing capsule according to one of the preceding claims, in which the piston (12) comprises materials selected from metal, glass, ceramic or plastic, if appropriate plastic-coated metal, glass and ceramic or metallized plastic.

16. The mixing capsule according to one of the preceding claims, in which the body (20) comprises materials selected from glass, ceramic, PTFE, if appropriate plastic-coated metal or stainless steel.

17. The mixing capsule according to one of the preceding claims, which contains, as the first and/or second component, a substance selected from solids and/or liquids.

18. Use of a mixing capsule according to one of the preceding claims, for mixing dental materials, in particular glass ionomer cements.

19. Use according to Claim 18, in which the mixing procedure comprises the following steps:
a) provision of a mixing capsule according to Claims 1 to 17,
b) insertion of the mixing capsule into a mixer unit with a capsule holder,
c) acceleration of the mixing capsule by translational and/or rotary movement, as a result of which the at least two chambers separated by a separating device are opened to form one mixing space,
d) removal of the mixing capsule from the mixer unit.

20. Mixer unit with a capsule holder, including the mixing capsule according to one of Claims 1 to 15.

21. Method for producing a mixing capsule according to one of Claims 1 to 15, comprising a two-component injection-moulding method.

## Revendications

1. Capsule de mélange, comprenant une cartouche (10), un bec d'éjection (14) et un piston (12), qui est agencé dans la cartouche de manière à pouvoir être déplacé, une chambre principale étanchée (18) pour recevoir un premier composant, une chambre secondaire (17) prévue dans le piston (12) pour recevoir un second composant, au moins un corps se déplaçant librement (20) et un dispositif de séparation (16) séparant la chambre secondaire (17) de la chambre principale (18) à percer par le corps (20) pendant l'opération de mélange, dans laquelle le corps (20), lorsque le dispositif de séparation (16) est fermé, est agencé dans la chambre principale (18), et la chambre secondaire (17) et le corps (20) sont conformés de sorte que le corps (20) puisse entrer dans la chambre secondaire (17), lors de l'opération d'éjection, comme corps de refoulement sensiblement pour la décharge complète et dans laquelle la capsule de mélange présente un codage.

2. Capsule de mélange selon la revendication 1, dans laquelle le codage s'effectue via le bec d'éjection (14).

3. Capsule de mélange selon l'une quelconque des revendications précédentes, dans laquelle le bec d'éjection (14) est monté à pivotement ou à rotation.

4. Capsule de mélange selon l'une quelconque des revendications précédentes, dans laquelle le bec d'éjection (14) et la cartouche (10) sont fabriqués par un procédé de moulage par injection à deux composants.

5. Capsule de mélange selon l'une quelconque des revendications précédentes, dans laquelle le corps (20) se présente sous une forme sphérique.

6. Capsule de mélange selon l'une quelconque des revendications précédentes, dans laquelle la chambre secondaire (17) a sensiblement la forme d'un hémisphère avec un rayon un peu plus grand que le corps (20).

7. Capsule de mélange selon l'une quelconque des revendications précédentes, dans laquelle le piston (12) peut être déformé.

8. Capsule de mélange selon l'une quelconque des revendications précédentes, dans laquelle le dispositif de séparation (16) adhère à une face annulaire (15), délimitant la chambre secondaire (17), du piston (12) et la transition entre la face annulaire (15) et la paroi interne de la chambre secondaire (17) présente une zone à arêtes vives (21) et/ou la transition entre la face annulaire (15) et la paroi interne de la chambre secondaire (17) est arrondie dans la zone restante (22).

9. Capsule de mélange selon l'une quelconque des revendications précédentes, dans laquelle le dispositif de séparation (16) est préparé préalablement pour former au moins un point de rupture théorique.

10. Capsule de mélange selon la revendication 9, dans laquelle la préparation préalable est ramifiée en forme d'étoile, en forme d'étoile vers la face frontale de la chambre secondaire et/ou présente une zone de forme sphérique.

11. Capsule de mélange selon l'une quelconque des revendications précédentes, dans laquelle le bec d'éjection (14) commence en excentrique sur la chambre principale (18).

12. Capsule de mélange selon la revendication 9, dans laquelle la paroi frontale de la chambre principale (18) pourvue du bec d'éjection (14) présente au moins une rigole (23) débouchant dans le bec d'éjection (14) et/ou au moins un évidement est ménagé dans la chambre secondaire.

13. Capsule de mélange selon l'une quelconque des revendications précédentes avec une autre chambre pour recevoir un troisième composant, dans laquelle l'autre chambre se présente sous la forme d'un coussin (24) formé dans le dispositif de séparation (16) ou est fixée sous forme de coussin sur la paroi externe de la capsule de mélange.

14. Capsule de mélange selon l'une quelconque des revendications précédentes, dans laquelle le dispositif de séparation (16) comprend au moins une feuille métallique et/ou des couches contenant des hydrocarbures et/ou des couches barrières céramiques, comme des couches de SiOx.

15. Capsule de mélange selon l'une quelconque des revendications précédentes, dans laquelle le piston (12) comprend des matériaux choisis parmi un métal, le verre, la céramique ou un matériau synthétique, éventuellement un métal, du verre et de la céramique ou un matériau synthétique métallisé revêtu(s) d'un matériau synthétique.

16. Capsule de mélange selon l'une quelconque des revendications précédentes, dans laquelle le corps (20) comprend des matériaux choisis parmi le verre, la céramique, le PTFE, éventuellement un métal ou de l'acier fin revêtu de matériau synthétique.

17. Capsule de mélange selon l'une quelconque des revendications précédentes, qui contient comme premier et/ou deuxième composants une substance choisie parmi des substances solides et/ou des liquides.

18. Utilisation d'une capsule de mélange selon l'une quelconque des revendications précédentes pour mélanger des substances dentaires, en particulier des céments de vitro-ionomères.

19. Utilisation selon la revendication 18, dans laquelle l'opération de mélange comprend les étapes suivantes :
a) préparation d'une capsule de mélange selon l'une quelconque des revendications 1 à 17
b) insertion de la capsule de mélange dans un appareil de mélange avec un support de capsule,
c) accélération de la capsule de mélange par mouvement de translation et/ou de rotation ce qui permet d'ouvrir les au moins deux chambres séparées par un dispositif de séparation en formant un espace de mélange,
d) retrait de la capsule de mélange de l'appareil de mélange.

20. Appareil de mélange avec un support de capsule, comprenant une capsule de mélange selon l'une quelconque des revendications 1 à 15.

21. Procédé pour fabriquer une capsule de mélange selon l'une quelconque des revendications 1 à 15, comprenant un procédé de moulage par injection à deux composants.
